# EUROPÄISCHE PATENTSCHRIFT

(11) **EP 4 442 375 B1**
(45) Veröffentlichungstag und Bekanntmachung des Hinweises auf die Patenterteilung: **13.05.2026**
(21) Anmeldenummer: 23166619.9
(22) Anmeldetag: 04.04.2023
(51) Int. Cl.: B07C 5/36, B07C 3/02, B65G 47/44, B65G 47/46, B65G 47/51

(54) **VORRICHTUNG UND VERFAHREN ZUM SORTIEREN VON OBJEKTEN**
DEVICE AND METHOD FOR SORTING OBJECTS
DISPOSITIF ET PROCÉDÉ DE TRI D'OBJETS

(43) Veröffentlichungstag der Anmeldung: 09.10.2024
(73) Patentinhaber: VITRONIC Machine Vision GmbH, 65189 Wiesbaden (DE)
(72) Erfinder: BUTZER, Erich, 63679 Schotten (DE)
(74) Vertreter: Neumann Müller Oberwalleney Patentanwälte PartG mbB

(56) Entgegenhaltungen:
- EP-A1- 3 978 149

## Beschreibung

Die Erfindung betrifft eine Vorrichtung zum Sortieren von Objekten mit den Merkmalen des Oberbegriffs des Anspruchs 1.

Die Erfindung betrifft ferner ein Verfahren zum Sortieren von Objekten mit den Merkmalen des Oberbegriffs des Anspruchs 12.

Eine solche Vorrichtung sowie ein solches Verfahren sind aus der EP 3 978 149 A1 bekannt. Die Sortiervorrichtung dient zum Austausch der Zielbehälter, wobei die Sortiervorrichtung eine Welle umfasst, die um eine erste horizontale Drehachse drehbar ist, wobei die Welle mit Trägern versehen ist, die jeweils so beschaffen sind, dass sie einen Behälter für Pakete lagern und in vertikaler Drehung um die erste Drehachse mitführen.

Eine ähnliche Vorrichtung zeigt US 2022/0168780 A1, wobei dort die Sortiervorrichtung linear verfahrbare Schlitten aufweist, um die Zielbehälter linear zu verstellen.

Eine Sortieranlage für flache Postsendungen wird in DE 10 2006 025 601 B3 beschrieben. Es laufen hintereinander angeordnete taschenförmige Behälter relativ zu einer Vielzahl von Zwischenablagen um. In den Behältern, deren Böden gesteuert geöffnet werden können, befinden sich zu sortierende flache Gegenstände in aufrechter Position. Die Zwischenablagen sind unterhalb der Behälterbahn hintereinander fest angeordnet. Die Gegenstände können somit aus den taschenförmigen Behältern gezielt in die Zwischenablagen fallend übergeben werden. Zielaufnahmen unterhalb der feststehenden Zwischenablagen werden ebenfalls relativ zu den Zwischenablagen bewegt. Die Übergabe der Gegenstände von den Zwischenablagen in die Zielaufnahmen erfolgt identisch zu der Übergabe der Gegenstände von den Behältern in die Zwischenablage.

In US 8 096 402 B2 ist eine weitere Sortieranlage beschrieben, wobei Sendungen auf einem Förderband bewegt werden und anschließend in Behälter einsortiert werden. Die Behälter können zwei Positionen einnehmen. In einer Position werden die Behälter mit den Sendungen beladen. Werden die Behälter nicht mehr befüllt, können diese in eine Bereitstellungszone bewegt werden. Die befüllten Behälter können zudem mit einem weiteren Förderband zum Weitertransport befördert werden.

Eine weitere Vorrichtung zum Sortieren von Objekten zeigt US 2021/0362194 A1.

Die der Erfindung zugrunde liegende Aufgabe besteht darin, eine Vorrichtung und ein Verfahren zum Sortieren von Objekten bereitzustellen, die ein flexibles, schnelles und platzsparendes Sortieren von Objekten ermöglichen.

Die Aufgabe wird durch eine Vorrichtung zum Sortieren von Objekten mit den Merkmalen des Anspruchs 1 gelöst.

Diese Vorrichtung ermöglicht ein schnelles Sortieren der Objekte, da sich die Zielbehälter in Abhängigkeit der Reihenfolge der von der Zuführvorrichtung zugeführten Objekte der Reihe nach auf die Objekte zubewegen. Nach der Übergabe eines Objekts in den entsprechenden Zielbehälter bewegt sich dieser in der Regel wieder an seine Ausgangsposition zurück, oder an eine andere Warteposition und macht die Übergabeposition somit frei für andere Zielbehälter. Für den Fall, dass an derselben Übergabeposition ein weiteres Objekt in denselben Zielbehälter übergeben werden soll, kann der Zielbehälter auf der zugeordneten Übergabeposition verharren.

Somit können mehr Zielbehälter mit Objekten bestückt werden als Übergabevorrichtungen vorhanden sind. Zudem ist die Sortiervorrichtung platzsparend, da die Zielbehälter in einem zwei- oder dreidimensionalen Positionsraster von Wartepositionen überführt werden.

Zum Fördern der Objekte kann die Zuführvorrichtung ein Förderband oder eine Rollenbahn umfassen.

Die Zuführvorrichtung kann zumindest einen Schieber umfassen, der eingerichtet ist, die Objekte an die zumindest eine Übergabevorrichtung zu fördern. Es ist auch denkbar, dass die Schieber selbst die Übergabevorrichtung darstellen. In diesem Fall werden die Objekte von den Schiebern direkt von der Zuführvorrichtung in die Zielbehälter geschoben. Es ist auch denkbar, dass die Zuführvorrichtung Förder- und Umlenkvorrichtungen aufweist, mit denen die Objekte einerseits entlang einer Hauptförderrichtung transportiert werden können und andererseits zur Übergabe an die Zielbehälter von der Hauptförderrichtung umgelenkt werden können. Die Zielbehälter können hierbei, je nach Typ, von oben oder von der Seite befüllt werden.

Die Zuführvorrichtung kann als linear verlaufendes Förderband oder eine linear verlaufende Rollenbahn ausgebildet sein. Die Zuführvorrichtung kann jedoch auch als Tray-Sorter oder umlaufendes Rondell-Förderband ausgebildet sein. Bei einem Rondell-Förderband werden die Objekte permanent im Kreis auf der Zuführvorrichtung transportiert. Unterhalb der Zuführvorrichtung werden die Zielbehälter auf der Sortiervorrichtung zum Sortieren der Objekte bewegt. Befindet sich ein Objekt oberhalb des korrekten Zielbehälters, öffnet sich zum Beispiel eine Klappe und das Objekt fällt aufgrund der Schwerkraft in den Zielbehälter. Anschließend schließt sich die Klappe wieder, damit ein neues Objekt aufgenommen werden kann.

Die zumindest eine Übergabevorrichtung kann einen Schieber, ein Förderband, eine Rollenbahn, eine Klappe oder eine, gegebenenfalls klappbare, Rutsche umfassen, um ein Objekt an einen Zielbehälter zu übergeben.

Die Sortiervorrichtung kann zum Bewegen der Zielbehälter eine Förder- und Umlenkvorrichtung zum Beispiel in Form von Förderbändern, Rollenbahnen oder Kreuztischen umfassen, die die Zielbehälter jeweils über Kreuz verfahren können, um ein Bewegen der Zielbehälter in zwei quer zueinander verlaufenden Richtungen zu ermöglichen. Es ist auch denkbar, dass die Förder- und Umlenkvorrichtungen als fahrerlose Transportfahrzeuge für einen oder mehrere Zielbehälter ausgestaltet sind.

Die Förder- und Umlenkvorrichtungen ermöglichen ein Bewegen der Zielbehälter in zumindest zwei Achsen, zum Beispiel entlang einer X-Achse und einer Y-Achse eines X-Y-Koordinatensystems bzw. eines zweidimensionalen Koordinatensystems. Die Förder- und Umlenkvorrichtungen können elektromechanische Schlitten oder Kreuztische umfassen.

Die Zielbehälter können hierbei jeweils individuell, also einzeln, bewegbar sein. Alternativ kann auch vorgesehen sein, dass die Sortiervorrichtung zumindest einen Behälterträger aufweist, auf dem mehrere der Zielbehälter aufgenommen sind, wobei der zumindest eine Behälterträger zum gemeinsamen Bewegen der aufgenommenen Zielbehälter in der Sortiervorrichtung bewegbar ist. Somit werden die auf jeweils einem der Behälterträger angeordneten Zielbehälter gemeinsam, also synchron, bewegt. Hierbei können mehrere Behälterträger vorgesehen sein, die jeweils eine Teilzahl der Zielbehälter gemeinsam bewegen.

Zum Bewegen der Behälterträger kann jeweils ein Kreuztisch vorgesehen sein, auf dem einer der Behälterträger angeordnet ist. Über den Kreuztisch kann der Behälterträger in einer Ebene bewegt werden. Der Kreuztisch kann ein Basiselement aufweisen, auf dem ein erster Schlitten entlang einer ersten Achse linear verschiebbar angeordnet ist. Auf dem ersten Schlitten ist ein zweiter Schlitten entlang einer zweiten Achse linear verschiebbar angeordnet, wobei die erste Achse und die zweite Achse quer zueinander, insbesondere rechtwinklig zueinander, angeordnet sind. Auf dem zweiten Schlitten ist der Behälterträger befestigt, sodass dieser in einer Ebene, die durch die erste Achse und die zweite Achse aufgespannt ist, bewegbar ist.

Das Positionsraster kann zumindest teilweise unterhalb der Zuführvorrichtung und/oder unterhalb der Übergabevorrichtung angeordnet sein, um eine möglichst platzsparende Anordnung zu gewährleisten. Insbesondere bei der oben beschriebenen Anordnung mit Behälterträgern wird hierdurch ein freies Bewegen der Zielbehälter ermöglicht.

Die Vorrichtung kann zudem eine Abgabevorrichtung zum Weitertransportieren der Zielbehälter aufweisen, mit der die Zielbehälter zu einer Abgabestation befördert werden, an der die Zielbehälter zum Beispiel zum Versand verpackt werden.

Die Abgabevorrichtung kann, vergleichbar zur Zuführvorrichtung, ein Förderband oder eine Rollenbahn zum Fördern der Objekte umfassen.

Die Vorrichtung kann zudem zumindest einen Portalarm mit Greifer aufweisen, der eingerichtet ist, Zielbehälter aus der Sortiervorrichtung zur Abgabevorrichtung zu bewegen und/oder leere Zielbehälter in die Sortiervorrichtung einzusetzen.

Der Portalarm kann Bestandteil eines Flächenportals oberhalb der Zuführvorrichtung, in einer höheren Ebene, sein. Der Greifer des Portalarms (Roboterarm) kann Zielbehälter greifen und diese zum Beispiel auf ein Förderband der Abgabevorrichtung zum Abtransport ablegen, wenn die Zielbehälter befüllt sind. Weiterhin können die Zielbehälter mit dem Portalarm ausgetauscht werden, sodass befüllte Zielbehälter durch leere Zielbehälter ersetzt werden können.

Der Portalarm kann mit drehbaren Doppelgreifern und/oder selbst drehbar ausgebildet sein, so dass die Zielbehälter direkt bei einer Anfahrt ausgetauscht werden können. Wenn ein Zielbehälter gefüllt ist, greift ein erster Greifer des Doppelgreifers den befüllten Zielbehälter. Der Doppelgreifer dreht sich daraufhin (zum Beispiel um 180°), um einen leeren Zielbehälter, der von einem zweiten Greifer auf einer anderen Seite des Portalarms gehalten wird, an die vorherige Stelle des befüllten Zielbehälters abzustellen. Der Portalarm kann entlang von Schienen hängend oberhalb der Sortiervorrichtung bewegt werden.

Die Aufgabe wird ferner durch ein Verfahren zum Sortieren von Objekten mit den Merkmalen des Anspruchs 12 gelöst.

Die Zielbehälter können demnach zum Beispiel mittels der oben beschriebenen Förder- und Umlenkvorrichtungen der Sortiervorrichtung transportiert werden. Sie werden zunächst an ihr entsprechendes Ziel, zu einem Objekt in der Übergabevorrichtung, befördert. Ist das Objekt erfolgreich in den Zielbehälter übergeben worden, wird der Zielbehälter entweder an seinen Ausgangspunkt oder auf eine andere Warteposition transportiert. Alternativ kann der Zielbehälter auch an eine weitere Übergabeposition transportiert werden oder an der zugeordneten Übergabeposition zur Aufnahme eines weiteren Objekts stehen bleiben.

Hierbei kann zunächst ein Identifikationsmerkmal des Objekts identifiziert bzw. erkannt werden. Daraufhin wird anhand des Identifikationsmerkmals das Objekt einem bestimmten Zielbehälter zugeordnet. Das Objekt kann dann mittels der Zuführvorrichtung an eine beliebige objektfreie Übergabevorrichtung gefördert werden. Gleichzeitig kann der bestimmte Zielbehälter zu der der objektfreien Übergabevorrichtung zugeordneten Übergabeposition bewegt werden, sodass dann das Objekt an dieser Übergabeposition mittels der Übergabevorrichtung in den Zielbehälter übergeben werden kann.

Bevorzugte Ausführungsbeispiele der Erfindung werden im Folgenden anhand der Figuren näher erläutert. Hierin zeigt
- Figur 1: eine schematische Draufsicht einer ersten Ausführungsform einer Vorrichtung zum Sortieren von Objekten,
- Figur 2: eine schematische Seitenansicht der Vorrichtung gemäß Figur 1,
- Figur 3: eine schematische Draufsicht einer zweiten Ausführungsform einer Vorrichtung zum Sortieren von Objekten,
- Figur 4: eine schematische Draufsicht einer dritten Ausführungsform einer Vorrichtung zum Sortieren von Objekten,
- Figur 5: eine schematische Draufsicht einer vierten Ausführungsform einer Vorrichtung zum Sortieren von Objekten und
- Figur 6: eine schematische Darstellung einer Förder- und Umlenkvorrichtung in Form eines Kreuztisches,

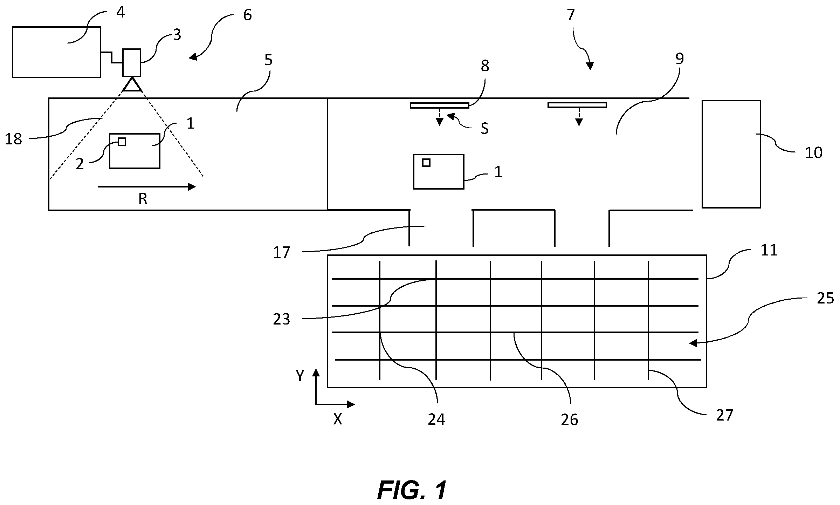

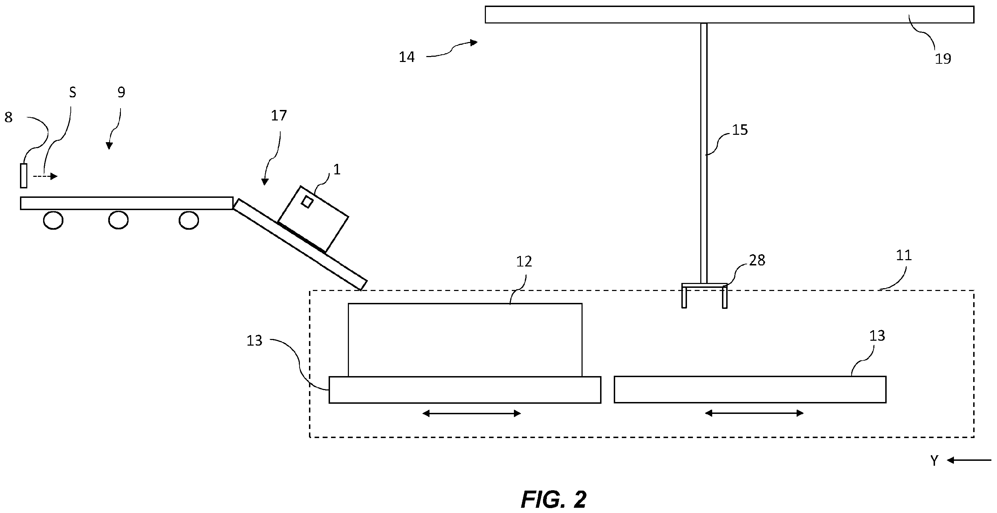

Die Figuren 1 und 2 zeigen schematisch eine Sortieranlage 7 zum Sortieren von Objekten 1 in unterschiedlichen Darstellungen. Bei den Objekten 1 kann es sich zum Beispiel um Pakete zum Versenden von Waren handeln. Die Sortieranlage 7 umfasst eine Zuführvorrichtung mit einem Förderband 5, einem sich daran anschließenden Auslaufförderband 9 und zwei Schiebern 8. Ferner weist die Sortieranlage 7 zwei Übergabevorrichtung in Form von Rutschen 17 auf.

Die Zuführvorrichtung ist derart ausgebildet, dass die Objekte 1 zu den Übergabevorrichtungen in Form von Rutschen 17 gefördert werden können. Hierzu dienen die Schieber 8, die jeweils einer der Rutschen 17 zugeordnet sind. Die Objekte 1 werden zunächst von dem Förderband 5 und dem Auslaufförderband 9 in einer Haupttransportrichtung R bewegt. Die Rutschen 17 befinden sich, bezogen auf die Haupttransportrichtung R, seitlich des Auslaufförderbandes 9. Die Rutschen 17 sind zudem, bezogen auf die Haupttransportrichtung R, hintereinander angeordnet. Die Schieber 8 sind jeweils auf einer gegenüberliegenden Seite des Auslaufförderbandes 9 angeordnet. Sobald ein Objekt 1 eine Rutsche 17 erreicht hat, auf die es geschoben werden soll, fährt der entsprechende Schieber 8 in einer Ausstoßrichtung S quer zur Haupttransportrichtung R aus und schiebt das Objekt 1 auf die entsprechende Rutsche 17.

Von dort rutscht das Objekt 1 in einen Zielbehälter 12, der sich auf einer der entsprechenden Rutsche 17 zugeordneten Übergabeposition 23 einer Sortiervorrichtung 11 befindet.

Die Sortiervorrichtung 11 ist derart ausgebildet, dass die Zielbehälter 12 wahlweise auf eine der zumindest einen Rutsche 17 zugeordneten Übergabepositionen 23 oder auf eine beliebige von mehreren Wartepositionen 24 bewegbar ist. Die Übergabepositionen 23 und die Wartepositionen 24 bilden hierbei ein zweidimensionales Positionsraster 25. Es ist auch möglich, dass nur die Wartepositionen 24 ein zweidimensionales Positionsraster bilden und die Übergabepositionen 23 hiervon separat positioniert sind.

Die Sortiervorrichtung 11 spannt eine Ebene in einem XY-Koordinatensystem auf, das das Positionsraster 25 bildet. Die Zielbehälter 12 können innerhalb dieser Ebene bzw. innerhalb des Positionsrasters 25 frei bewegt werden. Die Sortiervorrichtung 11 kann zum Bewegen der Zielbehälter 12 mehrere Förder- und Umlenkvorrichtungen 13 zum Beispiel in Form von Förderbändern oder Rollenbahnen umfassen, die jeweils über Kreuz angeordnet sein können, um ein Bewegen der Zielbehälter 12 in den beiden quer zueinander verlaufenden Richtungen, entlang einer X-Achse und einer Y-Ache des XY-Koordinatensystems, zu bewegen. Die Förder- und Umlenkvorrichtungen 13 können auch elektromechanische Schlitten oder Kreuztische umfassen. Grundsätzlich ist es auch denkbar, dass die Förder- und Umlenkvorrichtungen 13 fahrerlose Transportfahrzeuge sind.

In einer Ausgestaltung ist es möglich, dass die Zielbehälter 12 entlang einer bestimmten Anzahl von ersten Bahnen 26 in X-Richtung und einer bestimmten Anzahl von zweiten Bahnen 27 in Y-Richtung mittels hier nicht dargestellten Antriebsmitteln der Sortiervorrichtung 11 bewegbar sind. Die Kreuzpunkte der ersten Bahnen 26 und der zweiten Bahnen 27 bilden jeweils eine der Übergabepositionen 23 bzw. eine der Wartepositionen 24.

In Figur 1 ist eine Scanvorrichtung 6 gezeigt. Die Objekte 1 werden auf dem Förderband 5 von einem optischen Sensor 3, zum Beispiel einer Kamera oder einem Scanner, in einem Erfassungsbereich 18 des optischen Sensors 3 gescannt. Hierbei wird ein Identifikationsmerkmal 2, zum Beispiel ein Adressfeld der als Sendung ausgebildeten Objekte 1, mittels einer Verarbeitungseinheit 4 erkannt bzw. identifiziert.

Des Weiteren werden von der Verarbeitungseinheit 4 die Zielbehälter 12 bzw. die Förder- und Umlenkvorrichtungen 13 der Sortiervorrichtung 11 zum Bewegen der Zielbehälter 12 gesteuert. Die Verarbeitungseinheit 4 ordnet jedem gescannten Objekt 1 in Abhängigkeit des Identifikationsmerkmals 2 einen geeigneten Zielbehälter 12 zu. Daraufhin wird für den ausgewählten Zielbehälter 12 eine freie Übergabeposition 23 an einer Übergabevorrichtung (Rutsche 17) bestimmt, die frei von einem Objekt 1 ist. Der ausgewählte Zielbehälter 12 wird sodann mittels der Förder- und Umlenkvorrichtungen 13 der Sortiervorrichtung 11 zu der freien Übergabeposition 23 bewegt. Idealerweise erreicht der ausgewählte Zielbehälter 12 die freie Übergabeposition 23 bevor das Objekt 1 die Übergabevorrichtung (Rutsche 17) der freien Übergabeposition 23 erreicht. Sodann wird der entsprechende Schieber 8 betätigt, um das Objekt 1 über die Rutsche 17 in den ausgewählten Zielbehälter 12 zu übergeben.

Um eine Zwischenspeicherung von Objekten 1 zu ermöglichen, insbesondere für den Fall, dass das Objekt 1 die objektfreie Übergabevorrichtung (Rutsche 17) erreicht, bevor der ausgewählte Zielbehälter 12 die freie Übergabeposition 23 erreicht, kann die Übergabevorrichtung als Zwischenspeicher ausgebildet sein. Hierzu kann die Rutsche 17 zum Beispiel klappbar ausgestaltet sein, sodass auf dieser in einer hochgeklappten Position ein Objekt 1 zwischengespeichert werden kann. Sobald der ausgewählte Zielbehälter 12 diese klappbare Rutsche 17 erreicht, kann diese in eine heruntergeklappte Position überführt werden, sodass das Objekt 1 die Rutsche 17 in den ausgewählten Zielbehälter 12 hinunterrutscht. Anstelle einer klappbaren Rutsche kann auch ein Förderband oder eine Rollenbahn vorgesehen sein, die erst betätigt werden, wenn der ausgewählte Zielbehälter 12 die Übergabevorrichtung erreicht hat.

Die Förder- und Umlenkvorrichtungen 13 der Sortiervorrichtung 11 können elektromechanische Kreuztische umfassen, die die Zielbehälter 12 in zwei Raumrichtungen, in Richtung der X-Achse und in Richtung der Y-Achse, in einer Ebene bewegen können, wobei die Zielbehälter 12 von einer Förder- und Umlenkvorrichtung 13 zur nächsten Förder- und Umlenkvorrichtung 13 transportiert werden. Die Förder- und Umlenkvorrichtungen 13 können grundsätzlich auch derart ausgebildet sein, dass sie mehrere Zielbehälter 12 gleichzeitig und synchron zueinander bewegen.

Sobald das Objekt 1 in den ausgewählten Zielbehälter 12 übergeben wurde, wird dieser an seinen Ausgangspunkt oder an eine andere Wartepositionen 24 innerhalb des Positionsrasters 25 der Sortiervorrichtung 11 transportiert. Alternativ kann der Zielbehälter 12 auch an eine weitere Übergabeposition transportiert werden oder an der zugeordneten Übergabeposition zur Aufnahme eines weiteren Objekts 1 stehen bleiben.

Für den Fall, dass ein Objekt 1 zum Beispiel nicht über das Identifikationsmerkmal 2 identifiziert werden kann, steht am Ende des Auslaufförderbandes 9 ein Restbehälter 10 bereit, in den das Objekt 1 übergeben wird.

Figur 2 zeigt eine Seitenansicht der Sortieranlage 7. Es ist zu erkennen, dass die Sortieranlage 7 des gezeigten Ausführungsbeispiels in mehreren vertikal übereinander angeordneten Ebenen arbeitet. In einer unteren Ebene befinden sich die Förder- und Umlenkvorrichtungen 13, auf denen die Zielbehälter 12 angeordnet sind. In einer mittleren Ebene befindet sich das Förderband (hier nicht dargestellt) und das Auslaufförderband 9 mit der Rutsche 17. In der oberen Ebene ist ein Flächenportal 14 angeordnet, das mit mehreren Schienen 19 ausgestattet ist. Entlang der Schienen 19 kann eine Abgabevorrichtung 16 mit einem an einem Portalarm 15 angeordneten Greifer 28 hängend entlang der X-Achse und der Y-Achse verfahren werden. Der Greifer 28 lässt sich entlang einer vertikalen Z-Achse verfahren und um diese schwenken.

Ist ein Zielbehälter 12 gefüllt, wird der Portalarm 15 an die Warteposition 24 des gefüllten Zielbehälters 12 bewegt. Der gefüllte Zielbehälter 12 wird mit dem Greifer 28 gegriffen und mittels des Portalarms 15 zum Beispiel zu einem hier nicht dargestellten Förderband (Zielförderband) zum Weitertransport gefördert. Wurde ein Zielbehälter 12 zum Zielförderband transportiert, wird ein leerer Zielbehälter 12 mittels des Portalarms 15 auf eine leere Wartepositionen 24 auf eine Förder- und Umlenkvorrichtung 13 der Sortiervorrichtung 11 platziert.

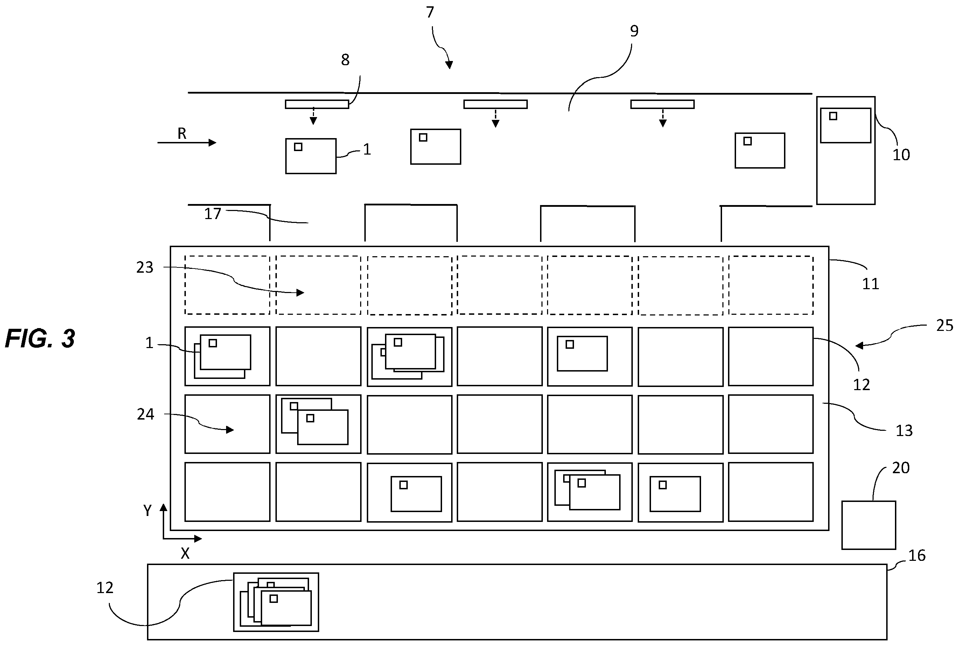

Figur 3 zeigt eine zweite Ausführungsform einer Sortieranlage 7, wobei Einzelheiten, die mit Einzelheiten der ersten Ausführungsform gemäß der Figuren 1 und 2 übereinstimmen, mit denselben Bezugszeichen versehen und dort beschrieben sind.

Die Förder- und Umlenkvorrichtungen 13 sind in mehreren Reihen parallel zur Haupttransportrichtung R derart angeordnet, dass sie ein zweidimensionales Positionsraster 25 aus einzelnen Wartepositionen 24 bilden. Die Zielbehälter 12 befinden sich jeweils auf einer der Förder- und Umlenkvorrichtungen 13. Die Zielbehälter 12 können jeweils parallel zur Haupttransportrichtung R zu einer benachbarten Förder- und Umlenkvorrichtung 13 derselben Reihe gefördert werden oder quer zur Haupttransportrichtung R zu einer benachbarten Förder- und Umlenkvorrichtung 13 einer benachbarten Reihe bewegt werden. Die Anzahl der Förder- und Umlenkvorrichtungen 13 und der Zielbehälter 12 ist beliebig.

Sobald ein Zielbehälter 12 vollständig befüllt ist, wird dieser, wie oben beschrieben, vom Portalarm 15 auf ein Förderband 16 einer Abgabevorrichtung befördert. Hierbei kann das endgültige Ziel des Zielbehälters 12 mittels eines Druckers 20 auf einen Papierstreifen ausgedruckt werden, der auf den Zielbehälter 12 geklebt wird.

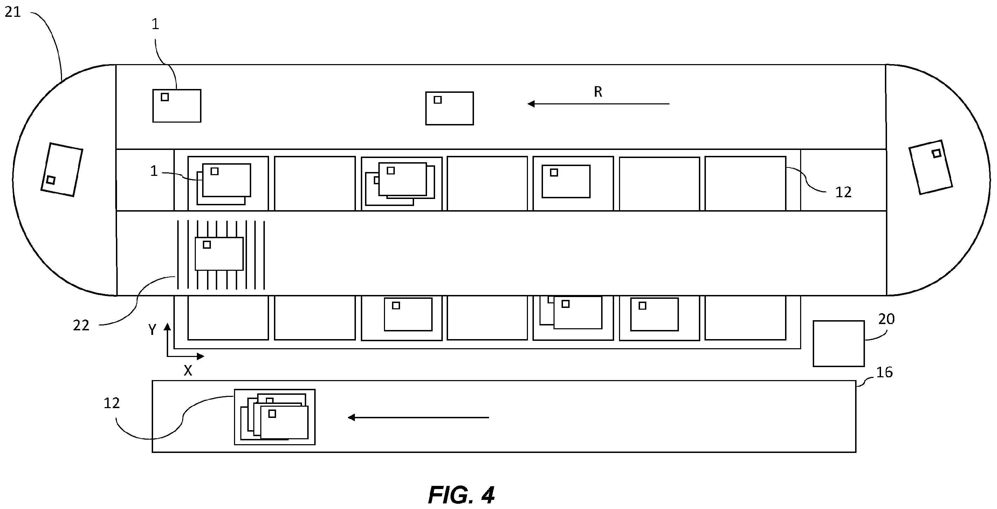

Figur 4 zeigt eine dritte Ausführungsform einer Sortieranlage 7, wobei Einzelheiten, die mit Einzelheiten der ersten oder zweiten Ausführungsform übereinstimmen, mit denselben Bezugszeichen versehen und dort beschrieben sind.

Die Sortieranlage 7 der dritten Ausführungsform umfasst eine Zuführvorrichtung mit einem Rondell-Förderband 21. Auf dem Rondell-Förderband 21 werden die Zielbehälter 12 im Kreis befördert, bis ein Zielbehälter 12 auf einer Förder- und Umlenkvorrichtung 13 einer Übergabeposition 23 unterhalb des Rondell-Förderbandes 21 transportiert wurde. In diesem Fall öffnet sich in einem Bereich der Übergabeposition 23 des Rondell-Förderbandes 21 eine Klappe 22, die Bestandteil der Übergabevorrichtung ist, sodass das Objekt 1 aufgrund der Schwerkraft in den Zielbehälter 12 fällt.

Die Förder- und Umlenkvorrichtungen 13 dienen jeweils dazu, ein auf einer der Förder- und Umlenkvorrichtungen 13 angeordneten Zielbehälter 12 in Richtung einer ersten Achse (X-Achse) und/oder einer zweiten Achse (Y-Achse) zu bewegen. Hierdurch ist es möglich, den Zielbehälter 12 von einer Förder- und Umlenkvorrichtung 13 zu einer benachbarten Förder- und Umlenkvorrichtung 13 zu befördern.

Zum Beispiel ist es denkbar, dass die Förder- und Umlenkvorrichtungen 13 um eine horizontale Achse drehbar gelagerte Rollen aufweist, von denen zumindest einige angetrieben sind. Die Rollen sind in einem Rahmen der Förder- und Umlenkvorrichtung 13 um eine vertikale Achse senkrecht zur ersten Achse (X-Achse) und zur zweiten Achse (Y-Achse) schwenkbar gelagert und mit einem Schwenkantrieb gekoppelt. Die Rollen können somit zwischen einer ersten Stellung, in der der Zielbehälter 12 entlang der ersten Achse (X-Achse) befördert wird, und einer zweiten Stellung, in der der Zielbehälter 13 in Richtung der zweiten Achse (Y-Achse) gefördert wird, verstellt werden.

Es ist auch denkbar, dass die Förder- und Umlenkvorrichtungen 13 jeweils Rollen aufweist, von denen zumindest einige angetrieben sind und zum Befördern des Zielbehälters 12 in einer ersten Achse (X-Achse) ausgerichtet sind. Ferner können die Förder- und Umlenkvorrichtungen 13 jeweils heb- und senkbare Förderelemente, zum Beispiel in Form von Ketten- oder Bandförderern, aufweisen. In einer abgesenkten Stellung der Förderelemente steht der Zielbehälter 12 auf den Rollen und kann in Richtung der ersten Achse bewegt werden. In einer angehobenen Stellung der Förderelemente steht der Zielbehälter 12 auf den Förderelementen und kann in Richtung der zweiten Achse bewegt werden.

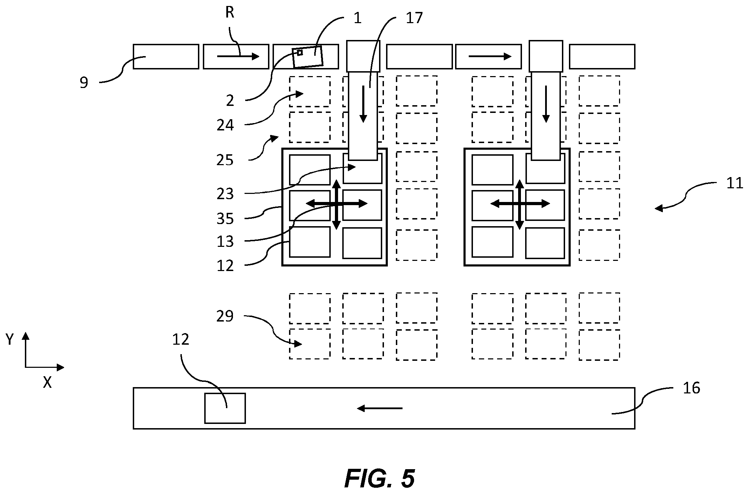

Figur 5 zeigt eine vierte Ausführungsform einer Sortieranlage 7, wobei Einzelheiten, die mit Einzelheiten der ersten drei Ausführungsformen übereinstimmen, mit denselben Bezugszeichen versehen und dort beschrieben sind.

Die Objekte 1 werden entlang der Haupttransportrichtung R mittels des Auslaufförderbandes 9 bewegt. Das Auslaufförderband 9 ist hierbei in einzelne Segmente aufgeteilt. An zwei Stellen des Auslaufförderbands 9 befinden sich Übergabevorrichtungen in Form von Rutschen 17 oder Förderbändern. Dargestellt sind zwei Übergabevorrichtungen, wobei grundsätzlich auch mehr oder weniger vorgesehen sein können.

Unterhalb des Auslaufförderbandes 9 und der Übergabevorrichtungen 17 befindet sich je Übergabevorrichtung eine Förder- und Umlenkvorrichtung 13 in Form eines später beschriebenen Kreuztisches. Die Förder- und Umlenkvorrichtungen 13 umfassen jeweils einen Behälterträger 35, auf dem sechs Zielbehälter 12 angeordnet sind. Grundsätzlich können eine beliebige Anzahl von Zielbehältern 12 auf dem Behälterträger 35 angeordnet sein. Der Behälterträger 35 ist mittels der Förder- und Umlenkvorrichtung 13 in X-Richtung und in Y-Richtung in einer Ebene bewegbar. Hierbei können die Zielbehälter 12 die Positionen einnehmen, die mit gestrichelten Linien angedeutet sind. Der Behälterträger 35 weist zwei Spalten jeweils in Y-Richtung verlaufend auf, wobei jede Spalte drei Zielbehälter 12 in Y-Richtung beinhaltet. Die beiden Spalten sind in X-Richtung nebeneinander angeordnet. In der gezeigten Stellung des Behälterträgers 35 kann dieser um eine weitere Spalte in Richtung der X-Achse nach rechts bewegt werden. Darüber hinaus kann der Behälterträger 35 um zwei Reihen in Richtung der Y-Achse nach oben bewegt werden. Somit kann jeder Zielbehälter 12 ein Positionsraster von drei Positionen in Y-Richtung und zwei Positionen in X-Richtung einnehmen. Die mittlere Position ist in dem vorliegenden Beispiel die Übergabeposition 23, in der die Objekte 1 in den auf der Übergabeposition 23 befindlichen Zielbehälter 12 übergeben werden können. Jeder der anderen Zielbehälter 12 kann ebenfalls zu dieser Übergabeposition 23 bewegt werden.

Darüber hinaus sind Reservepositionen 29 vorgesehen, auf die die Zielbehälter 12 mittels eines wie in Figur 2 dargestellten Flächenportals 14 vom Behälterträger 35 und umgekehrt bewegt werden können. Somit ist es möglich, in der gezeigten Ausführungsform, mit insgesamt zwölf Zielbehältern 12 auf Behälterträgern 35, Objekte in mehr als zwölf Zielbehälter 12 einzusortieren. Hierzu muss gegebenenfalls ein Zielbehälter 12 vom Behälterträger 35 auf eine der Reservepositionen 29 befördert werden und durch einen Zielbehälter 12 auf einer weiteren Reserveposition 29 ausgetauscht werden, bevor das Objekt 1 von der Übergabevorrichtungen 17 in den jeweiligen Zielbehälter 12 befördert werden kann.

Ferner dient das Flächenportal 14 dazu, vollständig befüllte Zielbehälter 12 auf das Förderband bzw. die Abgabevorrichtung 16 zu bewegen.

Mit den gezeigten Sortieranlagen ist es möglich, mehrere Objekte 1, die einem gemeinsamen Ziel zum Weitertransport zugeordnet sind, in einen oder mehrere Zielbehälter 12 einzusortieren. Diese Zuordnung von ein oder mehreren Zielbehältern 12 kann zudem dynamisch je nach Eingangshäufigkeit und Anzahl von Objekten 1 zu einem gemeinsamen Ziel erfolgen.

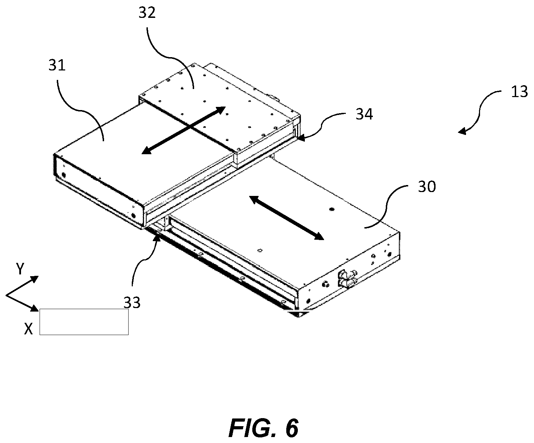

Figur 6 zeigt eine Förder- und Umlenkvorrichtung 13 in Form eines Kreuztisches, wie er bei der Sortiervorrichtung gemäß Figur 5 zum Einsatz kommen kann. Der Kreuztisch 13 umfasst ein Basiselement 30, das zum Beispiel fest auf dem Boden angeordnet sein kann. Auf dem Basiselement 30 ist ein erster Schlitten 31 entlang der X-Achse, wie mit dem entsprechenden Pfeil angedeutet, linear verschiebbar. Auf dem ersten Schlitten 30 wiederum ist ein zweiter Schlitten 32 entlang der Y-Achse, wie mit dem entsprechenden Pfeil angedeutet, linear verschiebbar. Die X-Achse und die Y-Achse sind senkrecht zueinander angeordnet und spannen eine, hier horizontale, Ebene auf.

Der erste Schlitten 31 ist hier über eine erste Linearführung 33 auf dem Basiselement 30 geführt. Die erste Linearführung 33 weist Führungselemente am ersten Schlitten 31 auf, die das Basiselement 30 umgreifen und in Führungsbahnen des Basiselements 30 eingreifen. Der zweite Schlitten 32 ist über eine zweite Linearführung 34 auf dem ersten Schlitten 31 geführt. Die zweite Linearführung 34 weist ebenfalls Führungselemente am zweiten Schlitten 32 auf, die den ersten Schlitten 31 umgreifen und in Führungsbahnen des ersten Schlittens 31 eingreifen.

Auf dem zweiten Schlitten 32 kann der Behälterträger 35 gemäß Figur 5 angeordnet und mit diesem verbunden sein, sodass der Behälterträger 35 in der von der X-Achse und der Y-Achse aufgespannten Ebene bewegt werden kann.

### Bezugszeichenliste

- 1: Objekt
- 2: Identifikationsmerkmal
- 3: optischer Sensor
- 4: Verarbeitungseinheit
- 5: Förderband (Zuführvorrichtung)
- 6: Scanvorrichtung
- 7: Sortieranlage
- 8: Schieber
- 9: Auslaufförderband
- 10: Restbehälter
- 11: Sortiervorrichtung
- 12: Zielbehälter
- 13: Förder- und Umlenkvorrichtung / Kreuztisch
- 14: Flächenportal
- 15: Portalarm
- 16: Förderband (Abgabevorrichtung)
- 17: Rutsche
- 18: Erfassungsbereich des optischen Sensors
- 19: Schiene
- 20: Drucker
- 21: Rondell-Förderband
- 22: Klappe
- 23: Übergabeposition
- 24: Warteposition
- 25: Positionsraster
- 26: erste Bahn
- 27: zweite Bahn
- 28: Greifer
- 29: Reserveposition
- 30: Basiselement
- 31: erster Schlitten
- 32: zweiter Schlitten
- 33: erste Linearführung
- 34: zweite Linearführung
- 35: Behälterträger

- R: Haupttransportrichtung
- S: Ausstoßrichtung

## Patentansprüche

1. Vorrichtung zum Sortieren von Objekten (1) umfassend
eine Zuführvorrichtung (5, 8, 9),
zumindest eine Übergabevorrichtung (17),
mehrere Zielbehälter (12),
wobei die Zuführvorrichtung (5, 8, 9) eingerichtet ist, die Objekte (1) zu der zumindest einen Übergabevorrichtung (17) zu fördern, und
wobei die Übergabevorrichtung (17) eingerichtet ist, die Objekte (1) an die Zielbehälter (12) zu übergeben, und
eine Sortiervorrichtung (11), in der die Zielbehälter (12)
derart bewegbar sind, dass die Zielbehälter (12) wahlweise auf eine der zumindest einen Übergabevorrichtung (17) zugeordneten Übergabeposition (23) oder eine beliebige von mehreren Wartepositionen (24) positionierbar sind, **dadurch gekennzeichnet,**
**dass** die Wartepositionen (24) ein zumindest zweidimensionales Positionsraster (25) bilden.

2. Vorrichtung nach Anspruch 1,
**dadurch gekennzeichnet,**
**dass** die Zuführvorrichtung ein Förderband (5) oder eine Rollenbahn zum Fördern der Objekte (1) umfasst.

3. Vorrichtung nach Anspruch 1 oder 2,
**dadurch gekennzeichnet,**
**dass** die Zuführvorrichtung zumindest einen Schieber (8) umfasst, der eingerichtet ist, die Objekte (1) an die zumindest eine Übergabevorrichtung (17) zu fördern.

4. Vorrichtung nach einem der Ansprüche 1 bis 3,
**dadurch gekennzeichnet,**
**dass** die zumindest eine Übergabevorrichtungen einen Schieber, ein Förderband, eine Rollenbahn, eine Klappe (22) oder eine Rutsche (17) umfassen.

5. Vorrichtung nach einem der Ansprüche 1 bis 4,
**dadurch gekennzeichnet,**
**dass** die Sortiervorrichtung (11) zum Bewegen der Zielbehälter (12) Förder- und Umlenkvorrichtungen (13) in Form von Förderbändern, Rollenbahnen, Kreuztischen oder fahrerlose Transportfahrzeuge umfasst.

6. Vorrichtung nach einem der Ansprüche 1 bis 5,
**dadurch gekennzeichnet,**
**dass** die Sortiervorrichtung (11) zumindest einen Behälterträger (35) aufweist, auf dem mehrere der Zielbehälter (12) aufgenommen sind, und
**dass** der zumindest eine Behälterträger (35) zum gemeinsamen Bewegen der aufgenommenen Zielbehälter (12) in der Sortiervorrichtung (11) bewegbar ist.

7. Vorrichtung nach einem der Ansprüche 1 bis 6,
**dadurch gekennzeichnet,**
**dass** die Sortiervorrichtung (11) zumindest einen Kreuztisch (13) aufweist, auf dem ein Behälterträger (35) angeordnet ist, der mittels des Kreuztisches (13) in einer Ebene bewegbar ist.

8. Vorrichtung nach einem der Ansprüche 1 bis 7,
**dadurch gekennzeichnet,**
**dass** das Positionsraster (25) zumindest teilweise unterhalb der Zuführvorrichtung (5, 8, 9) und/oder unterhalb der Übergabevorrichtung (17) angeordnet ist.

9. Vorrichtung nach einem der Ansprüche 1 bis 8,
**dadurch gekennzeichnet,**
**dass** die Vorrichtung eine Abgabevorrichtung (16) zum Weitertransportieren der Zielbehälter (12) aufweist.

10. Vorrichtung nach Anspruch 9,
**dadurch gekennzeichnet,**
**dass** die Abgabevorrichtung (16) ein Förderband oder eine Rollenbahn zum Fördern der Objekte (1) umfasst.

11. Vorrichtung nach Anspruch 10,
**dadurch gekennzeichnet,**
**dass** die Vorrichtung zumindest einen Portalarm (15) mit Greifer (28) aufweist, der eingerichtet ist, Zielbehälter (12) aus der Sortiervorrichtung (11) zur Abgabevorrichtung (16) zu bewegen und/oder leere Zielbehälter (12) in die Sortiervorrichtung (11) einzusetzen.

12. Verfahren zum Sortieren von Objekten (1) mit den folgenden Verfahrensschritten:
Fördern eines Objekts (1) an eine Übergabevorrichtung (17) mittels einer Zuführvorrichtung (5, 8, 9),
Bewegen eines Zielbehälters (12) an eine der Übergabevorrichtung (17) zugeordneten Übergabeposition (23), und
Übergeben des Objekts (1) von der Übergabevorrichtung (17) in den Zielbehälter (12) mittels der Übergabevorrichtung (17),
**gekennzeichnet durch den Verfahrensschritt:**
Bewegen des Zielbehälters (12) an eine Warteposition (24) eines zumindest zweidimensionalen Positionsrasters (25) aus Wartepositionen (24), an eine weitere Übergabeposition (23) oder Belassen des Zielbehälters (12) an der zugeordneten Übergabeposition (23) zur Aufnahme eines weiteren Objekts (1).

13. Verfahren nach Anspruch 12,
**gekennzeichnet durch die Verfahrensschritte:**
Identifizieren eines Identifikationsmerkmals (2) des Objekts (1),
Zuordnen des Objekts (1) zu einem bestimmten Zielbehälter (12) anhand des Identifikationsmerkmals (2),
Fördern des Objekts (1) an eine objektfreie Übergabevorrichtung (17) mittels der Zuführvorrichtung (5, 8, 9) und
Bewegen des bestimmten Zielbehälters (12) zu der der objektfreien Übergabevorrichtung (17) zugeordneten Übergabeposition (23).

## Claims

1. An apparatus for sorting objects (1) comprising
a feeding device (5, 8, 9),
at least one transfer device (17),
several target containers (12),
wherein the feeding device (5, 8, 9) is configured to convey the objects (1) to the at least one transfer device (17), and
wherein the transfer device (17) is configured to transfer the objects (1) to the target containers (12), and
a sorting device (11) in which the target containers (12) can be moved such that the target containers (12) can be positioned either at a transfer position (23) assigned to the at least one transfer device (17) or at any one of a plurality of waiting positions (24),
**characterized in**
**that** the waiting positions (24) form an at least two-dimensional position grid (25).

2. The apparatus according to claim 1,
**characterized in**
**that** the feeding device comprises a conveyor belt (5) or a roller conveyor for conveying the objects (1).

3. The apparatus according to claim 1 or 2,
**characterized in**
**that** the feeding device comprises at least one pusher (8) that is configured to convey the objects (1) to the at least one transfer device (17).

4. The apparatus according to one of claims 1 to 3,
**characterized in**
**that** the at least one transfer device comprises a pusher, a conveyor belt, a roller conveyor, a flap (22) or a slide (17).

5. The apparatus according to one of claims 1 to 4,
**characterized in**
**that** the sorting device (11) for moving the target containers (12) comprises conveying and deflecting devices (13) in the form of conveyor belts, roller conveyors, cross tables or driverless transport vehicles.

6. The apparatus according to one of claims 1 to 5,
**characterized in**
**that** the sorting device (11) has at least one container carrier (35) on which a plurality of the target containers (12) are accommodated, and
**that** the at least one container carrier (35) is movable in the sorting device (11) for moving the accommodated target containers (12) together.

7. The apparatus according to one of claims 1 to 6,
**characterized in**
**that** the sorting device (11) has at least one cross table (13) on which a container carrier (35) is arranged that can be moved in a plane by means of the cross table (13).

8. The apparatus according to one of claims 1 to 7,
**characterized in**
**that** the positioning grid (25) is arranged at least partially below the feeding device (5, 8, 9) and/or below the transfer device (17).

9. The apparatus according to one of claims 1 to 8,
**characterized in**
**that** the apparatus has a dispensing device (16) for further transportation of the target containers (12).

10. The apparatus according to claim 9,
**characterized in**
**that** the dispensing device (16) comprises a conveyor belt or a roller conveyor for conveying the objects (1).

11. The apparatus according to claim 10,
**characterized in**
**that** the apparatus has at least one gantry arm (15) with gripper (28), which is configured to move target containers (12) from the sorting device (11) to the dispensing device (16) and/or to insert empty target containers (12) into the sorting device (11).

12. A method for sorting objects (1) with the following method steps:
Conveying an object (1) to a transfer device (17) by means of a feeding device (5, 8, 9),
Moving a target container (12) to a transfer position (23) assigned to the transfer device (17), and
Transferring the object (1) from the transfer device (17) into the target container (12) by means of the transfer device (17),
**characterized by the process step:**
Moving the target container (12) to a waiting position (24) of an at least two-dimensional position grid (25) from waiting positions (24), to a further transfer position (23) or leaving the target container (12) at the assigned transfer position (23) to receive a further object (1).

13. Method according to claim 12,
**characterized by the method steps:**
Identifying an identification feature (2) of the object (1),
Assigning the object (1) to a specific target container (12) using the identification feature (2),
Conveying the object (1) to an object-free transfer device (17) by means of the feeding device (5, 8, 9) and
Moving the specific target container (12) to the transfer position (23) assigned to the object-free transfer device (17).

## Revendications

1. Dispositif, destiné à trier des objets (1), comprenant un dispositif d'alimentation (5, 8, 9),
au moins un dispositif de transfert (17),
plusieurs contenants assignés (12),
le dispositif d'alimentation (5, 8, 9) étant configuré pour convoyer les objets (1) vers l'au moins un dispositif de transfert (17) et
le dispositif de transfert (17) étant configuré pour transférer les objets (1) dans les contenants assignés (12) et
un dispositif de tri (11), dans lequel les contenants assignés (12) sont déplaçables de telle sorte, que les contenants assignés (12) soient positionnables sélectivement dans une position de transfert (23) associée à l'au moins un dispositif de transfert (17) ou dans l'une quelconque parmi plusieurs positions d'attente (24),
**caractérisé**
**en ce que** les positions d'attente (24) constituent une trame de positions (25) au moins bidimensionnelle.

2. Dispositif selon la revendication 1,
**caractérisé**
**en ce que** le dispositif d'alimentation comprend une bande de convoyage (5) ou un transrouleur pour convoyer les objets (1).

3. Dispositif selon la revendication 1 ou 2,
**caractérisé**
**en ce que** le dispositif d'alimentation comprend au moins un poussoir (8), qui est configuré pour convoyer les objets (1) vers l'au moins un dispositif de transfert (17).

4. Dispositif selon l'une quelconque des revendications 1 à 3,
**caractérisé**
**en ce que** l'au moins un dispositif de transfert comprend un poussoir, une bande de convoyage, un transrouleur, une trappe (22) ou un toboggan (17).

5. Dispositif selon l'une quelconque des revendications 1 à 4,
**caractérisé**
**en ce que** pour déplacer les contenants assignés (12), le dispositif de tri (11) comprend des dispositifs de convoyage et de renvoi (13) sous la forme de bandes de convoyage, de transrouleurs, de tables à mouvements croisés ou de véhicules de transport sans conducteur.

6. Dispositif selon l'une quelconque des revendications 1 à 5,
**caractérisé**
**en ce que** le dispositif de tri (11) comporte au moins un porte-contenants (35) sur lequel sont réceptionnés plusieurs des contenants assignés (12) et
**en ce que** l'au moins un porte-contenants (35) est déplaçable dans le dispositif de tri (11), pour déplacer conjointement les contenants assignés (12).

7. Dispositif selon l'une quelconque des revendications 1 à 6,
**caractérisé**
**en ce que** le dispositif de tri (11) comporte au moins une table à mouvements croisés (13), sur laquelle est placé un porte-contenants (35), qui au moyen de la table à mouvements croisés (13), est déplaçable dans un plan.

8. Dispositif selon l'une quelconque des revendications 1 à 7,
**caractérisé**
**en ce que** la trame de positions (25) est placée au moins en partie en-dessous du dispositif d'alimentation (5, 8, 9) et / ou en-dessous du dispositif de transfert (17).

9. Dispositif selon l'une quelconque des revendications 1 à 8,
**caractérisé**
**en ce que** le dispositif comporte un dispositif de distribution (16), pour le transport ultérieur des contenants assignés (12).

10. Dispositif selon la revendication 9,
**caractérisé**
**en ce que** le dispositif de distribution (16) comprend une bande de convoyage ou un transrouleur, pour le convoyage des objets (1).

11. Dispositif selon la revendication 10,
**caractérisé**
**en ce que** le dispositif comporte au moins un bras e portique (15) avec préhenseur (28), qui est conçu pour déplacer de contenants assignés (12) hors du dispositif de tri (11) vers le dispositif de distribution (16) et / ou pour insérer des contenants assignés (12) vides dans le dispositif de tri (11).

12. Procédé, destiné à trier des objets (1), avec les étapes de procédé suivantes, consistant à :
convoyer un objet (1) vers un dispositif de transfert (17), au moyen d'un dispositif d'alimentation (5, 8, 9),
déplacer un contenant assigné (12) vers une position de transfert (23), associée au dispositif de transfert (17) et
transférer l'objet (1) du dispositif de transfert (17) dans les contenants assignés (12), au moyen du dispositif de transfert (17),
**caractérisé par** l'étape de procédé consistant à :
déplacer le contenant assigné (12) vers une position d'attente (24) d'une trame de positions (25) au moins bidimensionnelle, de positions d'attente (24) vers une autre position de transfert (23) ou laisser le contenant assigné (12) dans la position de transfert (23) associée, pour réceptionner un autre objet (1).

13. Procédé selon la revendication 12,
**caractérisé par** les étapes de procédé consistant à :
identifier une caractéristique d'identification (2) de l'objet (1),
associer l'objet (1) à un contenant assigné (12) déterminé, à l'aide de la caractéristique d'identification (2),
convoyer l'objet (1) vers un dispositif de transfert (17) exempt d'objet, au moyen du dispositif d'alimentation (5, 8, 9) et
déplacer le contenant assigné (12) déterminé vers la position de transfert (23) associée au dispositif de transfert (17) exempt d'objet.
